# EUROPÄISCHE PATENTSCHRIFT

(11) **EP 2 468 973 B1**
(45) Veröffentlichungstag und Bekanntmachung des Hinweises auf die Patenterteilung: **30.03.2016**
(21) Anmeldenummer: 11152644.8
(22) Anmeldetag: 31.01.2011
(51) Int. Cl.: E04B 9/00, E04B 9/02, F24D 3/16, F24F 5/00

(54) **Raumelement, insbesondere zum Kühlen, Heizen und/oder zur Schallabsorption**
Spatial element, in particular for cooling, heating and/or sound absorption
Elément spatial, notamment pour le refroidissement, le chauffage et/ou l'absorption acoustique

(30) Priorität: 23.12.2010 DE 102010056022
(43) Veröffentlichungstag der Anmeldung: 27.06.2012
(73) Patentinhaber: Uponor Innovation AB, 73061 Virsbo (SE)
(72) Erfinder: Nüßle, Fritz, 71263 Weil der Stadt (DE)
(74) Vertreter: Epping - Hermann - Fischer

(56) Entgegenhaltungen:
- EP-A2- 0 757 211
- EP-A2- 1 512 915
- BE-A- 571 490
- DE-A1- 1 484 065
- DE-A1-102006 029 597
- DE-U1- 29 609 858
- DE-U1-202009 000 717

## Beschreibung

Die vorliegende Erfindung betrifft ein Raumelement, insbesondere zum Kühlen, Heizen und/oder zur Schallabsorption. Das Raumelement umfasst eine erste Decklage, eine zweite Decklage, die von der ersten Decklage beabstandet ist, und eine Leitungsvorrichtung.

Ein derartiges Raumelement ist aus DE 10 2004 027 829 B4 bekannt. Das Raumelement umfasst eine zwischen den Decklagen angeordnete Zwischenschicht, die die Decklagen voneinander beabstandet und stoffschlüssig miteinander verbindet. Die Leitungsvorrichtung ist in der Zwischenschicht angeordnet. Die Zwischenschicht besteht aus wabenförmig angeordneten Dünnblechstegen und die Leitungsvorrichtung ist zur Erzeugung einer wärmeleitenden Verbindung in die Zwischenschicht eingepresst.

Aus EP 0 757 211 A2 ist ein Raumelement nach dem Oberbegriff des Anspruchs 1 bekannt.

Während früher abgehängte Decken ausschließlich zur Verkleidung von Betondecken und unattraktiven technischen Installationen dienten, wirken solche Raumelemente heute als multifunktionale Bauelemente auch zum Temperieren von Gebäuden. Dabei können offene Deckenkühlsegel mit Betondecken eine sinnvolle Symbiose eingehen, wenn deren jeweilige Eigenschaften erkannt und in ein technisches Konzept eingebunden werden. Baupraktisch bedeutet dies, dass mehrere Gewerke koordiniert werden müssen.

Deckenkühlsegel (auch für den Heizbetrieb) können mit integrierter Zulufteinbringung, breitbandig schallabsorbierenden Eigenschaften und Lichtreflexion auf den Arbeitsplatz als multifunktionale Bauelemente ausgebildet werden und genügen hohen architektonischen Ansprüchen. Sie arbeiten sehr effizient, wenn sie in ein intelligentes Energieversorgungskonzept eingebunden werden. Dabei trägt die Mess-, Steuer- und Regelungstechnik eine besondere Verantwortung, denn diese ist entscheidend verantwortlich dafür, wie die Energieressourcen genutzt werden.

Der Erfindung liegt die Aufgabe zugrunde, ein Raumelement zu schaffen, das eine verbesserte Konvektions- und Strahlungswärmeübertragung aufweist.

Die Lösung dieser Aufgabe erfolgt gemäß dem kennzeichnenden Teil des Anspruchs 1.

. Vorteilhafte Ausgestaltungen des erfindungsgemäßen Raumelements werden in den Ansprüchen 2 bis 13 beschreiben.

Das Trägerelement des erfindungsgemäßen Raumelementes weist einen ersten Steg, einen zweiten Steg und einen Verbindungsabschnitt, der den ersten Steg mit dem zweiten Steg ver bindet, auf. Der erste Steg und der zweite Steg verlaufen annähernd parallel zueinander. Weiterhin verläuft der Verbindungsabschnitt annähernd orthogonal zum ersten Steg und zum zweiten Steg. Durch diese Ausgestaltung weist das Trägerelement eine erhöhte Steifigkeit auf, wodurch erleichtert wird, dass das Trägerelement durch Kraftschluss zwischen den Deckelementen gehalten werden kann. Dieser Vorteil wird dadurch erzielt, dass die Stege orthogonal zu den Deckelementen verlaufen, wodurch die Stege eine hohe Kraft aufnehmen können. Das Trägerelement weist dem nach einen annähernd H-förmigen Querschnitt auf.

Das erfindungsgemäße Raumelement zeichnet sich insbesondere durch eine wärmeleitende Verbindung zwischen der Leitungsvorrichtung und den Deckenelementen aus. Diese wärmeleitende Verbindung wird durch das Trägerelement gewährleistet. So entstehen thermisch aktivierte Decklagen des Raumelementes, welche durch dieselbe Leistungsvorrichtung gekühlt oder geheizt werden. Die erfindungsgemäße Ausgestaltung ermöglicht weiterhin, dass die an der Oberseite des Raumelementes vorbeiströmende Raumluft unter Wärmeabgabe/-aufnahme ungehindert in den Raum zurückströmen kann. Der konvektive Wärmeaustausch wird dadurch erhöht. Wird das erfindungsgemäße Raumelement an einer Geschosstrenndecke angeordnet, so bildet die erste Decklage eine Strahlungsaustauschfläche zur Geschosstrenndecke. Auf diese Weise kann der Strahlungsaustausch zur darüber liegenden Betondecke hergestellt oder verbessert werden.

In einer bevorzugten Ausführungsform ist das Trägerelement aus Metall, insbesondere aus Aluminium gefertigt. Dies ermöglicht eine ausreichende Wärmeleitfähigkeit des Trägerelementes und gewährleistet die Wirtschaftlichkeit der Herstellung. In einer bevorzugten Ausführungsform handelt es sich bei den Trägerelementen um Aluminiumstrangpressprofile.

Die im Abstand angeordneten Trägerelemente können nach erforderlicher Heiz-/Kühlleistung in variablen Abständen, Anzahl und Längen montiert werden. Daraus ergibt sich eine hohe Variabilität an Einsatzmöglichkeiten des Raumelementes.

Bevorzugterweise können die Decklagen aus Stahlblech oder Aluminiumblech gefertigt sein. Zur Erhöhung der Stabilität der Decklagen sind diese allseits aufgekantet und nach einer Seite hin offen. Vorzugsweise kann das Trägerelement kraftschlüssig mit den Decklagen verbunden sein, womit die Kühlleistung weiter verbessert werden kann.

In einer bevorzugten Ausgestaltung ist der Kontaktabschnitt durch eine Aussparung gebildet, in der die Leitungsvorrichtung, vorzugsweise mittels Kraftschluss, aufgenommen ist. Diese Ausgestaltung ermöglicht, durch Erhöhung der Fläche, in der die Leitungsvorrichtung mit dem Trägerelement in Berührung steht, eine verbesserte Wärmeübertrag zwischen Leitungsvorrichtung und Trägerelement. Somit wird die flächenbezogene Wärme- und Kühlleistung des Raumelementes weiter erhöht.

Vorteilhafterweise weist die Aussparung eine an die Form der Leistungsvorrichtung angepasste Form auf, wobei vorzugsweise die Leitungsvorrichtung im Querschnitt kreisförmig ist. Durch die angepasste Form wird die Fläche, in der die Leitungsvorrichtung mit dem Trägerelement in Berührung steht, weiter erhöht, wodurch eine weitere Verbesserung der Leistungsfähigkeit des Raumelementes erzielt wird. Weist die Leitungsvorrichtung einen kreisförmigen Querschnitt auf, so weist die Aussparung ebenfalls, zumindest abschnittsweise, einen kreisförmigen Querschnitt auf. Vorzugsweise kann die Leitungsvorrichtung auch formschlüssig in der Aussparung aufgenommen sein.

In einer bevorzugten Ausgestaltung ist an der Aussparung eine Kerbe, die im Wesentlichen parallel zum Trägerelement verlauft, angeordnet. Diese Kerbe ermöglicht eine erhöhte Verformbarkeit der Aussparung, wodurch bei der Herstellung das Einpressen der Leitungsvorrichtung in die Aussparung erleichtert wird. Dies bietet zusätzlich den Vorteil, dass der Formschluss zwischen Leitungsvorrichtung und Trägerelement weiterhin erhöht wird.

Bevorzugterweise ist die Aussparung durch den ersten Steg, den zweiten Steg und den Verbindungsabschnitt gebildet.

Vorteilhafterweise weist das Trägerelement wenigstens ein erstes Wärmeleitelement, an dem die erste Kontaktfläche angeordnet ist, auf, wobei das erste Wärmeleitelement vorzugsweise im Wesentlichen parallel zur ersten Decklage verläuft. Das erste Wärmeleitelement ermöglicht eine Erhöhung der Fläche, in der das Trägerelement mit der ersten Decklage in Verbindung steht. Durch die bevorzugte Ausgestaltung, in der das erste Wärmeleitelement im Wesentlichen parallel zur ersten Decklage verläuft, erhöht sich ebenfalls die Fläche, in der das Trägerelement mit der ersten Decklage in Berührung steht. Weiterhin kann das erste Wärmeleitelement zur Kraftübertragung zwischen dem ersten Deckelement und dem Trägerelement dienen, wodurch der Kraftschluss zwischen den Deckenelementen und dem Trägerelement weiter erhöht wird.

In einer bevorzugten Ausgestaltung ist das erste Wärmeleitelement mit dem ersten Steg und/oder mit dem zweiten Steg verbunden. Somit wird die Wärmeübertragung zwischen den Stegen und dem ersten Wärmeleitelement gewährleistet. Weiterhin wird die Kraftübertragung zwischen dem ersten Wärmeleitelement und den Stegen gewährleistet.

Vorzugsweise weist das Trägerelement wenigstens ein zweites Wärmeleitelement, an dem die zweite Kontaktfläche angeordnet ist, auf, wobei das zweite Wärmeleitelement vorzugsweise im Wesentlichen parallel zur zweiten Decklage verläuft. Das zweite Wärmeleitelement ermöglicht eine Erhöhung der Fläche, in der das Trägerelement mit der zweiten Decklage in Verbindung steht. Durch die bevorzugte Ausgestaltung, in den das zweite Wärmeleitelement im Wesentlichen parallel zur zweiten Decklage verläuft, erhöht ebenfalls die Fläche, in der das Trägerelement mit der zweiten Decklage in Berührung steht. Weiterhin kann das zweite Wärmeleitelement zur Kraftübertragung zwischen dem ersten Deckelement und dem Trägerelement dienen, wodurch der Kraftschluss zwischen den Deckenelementen und dem Trägerelement weiter erhöht wird.

In einer bevorzugten Ausgestaltung ist das zweite Wärmeleitelement mit dem ersten Steg und/oder mit dem zweiten Steg verbunden. Somit wird die Wärmeübertragung zwischen den Stegen und dem zweiten Wärmeleitelement gewährleistet. Weiterhin wird die Kraftübertragung zwischen dem zweiten Wärmeleitelement und den Stegen gewährleistet.

Bevorzugterweise ist das Raumelement durch ein Schallabsorptionselement gekennzeichnet, das in einer ersten Richtung zwischen den Decklagen und einer orthogonal zur ersten Richtung verlaufenden zweiten Richtung zwischen den Trägerelementen angeordnet ist. Wird das Raumelement parallel zu und unterhalb einer Decke angebracht, so entspricht die erste Richtung der Vertikalrichtung und die zweite Richtung einer quer zu den Trägerelementen verlaufenden Horizontalrichtung. Bevorzugterweise können die Schallabsorptionselemente in der ersten Richtung zwischen den Wärmeleitelementen angeordnet sein. Mit Schallabsorption ist insbesondere die Absorption von Luftschall gemeint. Vorzugsweise besteht das Schallabsorptionselement aus einem porösen Schallschluckstoff, weiterhin vorzugsweise mit durchgehenden Poren. In einer bevorzugten Ausgestaltung handelt es sich bei dem Schallschluckstoff um Melaminharzschaum. Darüber hinaus kann der Schallschluckstoff aus Polyesterfasern bestehen. Durch die Integration des Schallabsorptionselementes in dem Raumelement wird die Nachhallzeit in Räumen reduziert und für eine angenehmere, gedämpfte Raumakustik gesorgt.

Vorzugsweise ist das Raumelement durch einen Latentwärmespeicher gekennzeichnet, der in der ersten Richtung zwischen den Decklagen und in der zweiten Richtung zwischen den Trägerelementen angeordnet ist. Latentwärmespeicher im Sinne der Anmeldung bezeichnet ein Phasenübergangsmaterial (kurz: PCM), wie es beispielsweise in dem aus EP 1 470 372 B1 bekannten Raumelement verwendet wird. Der Latentwärmespeicher ist eine Vorrichtung, die thermische Energie verborgen, verlustarm, mit vielen Wiederholzyklen und über lange Zeit speichern kann. Ein Latentwärmespeicher funktioniert durch die Ausnutzung der Enthalpie reversibler thermodynamischer Zustandsänderungen eines Speichermediums, wie zum Beispiel des Phasenübergangs fest-flüssig. Der Vorteil dieser Wärmespeichertechnik beruht darauf, in einem durch die Schmelztemperatur des eingesetzten Speichermaterials genau festgelegten Temperaturbereich möglichst viel Kühlenergie in möglichst wenig Masse zu speichern. Die gespeicherte Kühlenergie steht dem Raum auch dann zur Verfügung, wenn die Versorgung zeitweise unterbrochen wird oder nur eingeschränkt zur Verfügung steht. Somit kann das Raumelement für einen begrenzten Zeitraum eine noch höhere Kühlleistung liefern. Vorzugsweise kann das Schallabsorptionselement in der zweiten Richtung zwischen zwei Latentwärmespeichern angeordnet sein.

In einer bevorzugten Ausgestaltung verläuft die Leitungsvorrichtung mäanderförmig. Durch diese Ausgestaltung kann die gesamte Kontaktfläche zwischen Leitungsvorrichtung und Trägerelementen an den Erfordernissen an das Raumelement angepasst werden. Bei einer erhöhten Anzahl an Mäandern, kann auch die Gesamtlänge der Leitungsvorrichtung erhöht werden, wodurch eine insgesamt höhere Fläche, in der die Leitungsvorrichtung mit dem Trägerelement in Verbindung steht, erreicht wird, und dadurch die flächenbezogene Wärme- und Kühlleistung des Raumelementes insgesamt erhöht wird. Während die untere Strahlungsfläche im Wesentlichen im Strahlungsaustausch mit den Raumumschließungsflächen steht, befindet sich die obere Strahlungsfläche im Strahlungsaustausch mit der darüber befindlichen Betondecke. Auf diese Weise wird dieser gebäudeeigenen Speichermasse Wärme- oder Kühlenergie zugeführt. Dies hat den großen Vorteil, dass durch die gespeicherte thermische Energie Lastspitzen vermieden werden und der Raum auch außerhalb der Betriebszeit des Deckenelementes durch die gespeicherte Energie temperiert wird.

Vorzugsweise weisen die Decklagen weiterhin eine Perforation auf. Vorzugsweise können die Perforationen sowohl als Luftaustrittsöffnung, als auch als Lufteintrittsöffnung dienen. Die Perforation ermöglich somit, dass Wärme nicht nur durch von den Decklagen ausgehende Radiation an die Umwelt abgegeben wird, sondern auch durch Konvektion. So kann beispielsweise sich in dem Raumelement befindende gekühlte Luft durch die Perforation in den Raum gelangen. In bevorzugten Fällen wird bei einer nach oben gerichteten Luftausblasung über die Perforation der konvektive Wärmeaustausch mit der darüber befindlichen Betondecke verbessert.

Einzelheiten und weitere Vorteile des erfindungsgemäßen Raumelementes ergeben sich aus den nachfolgend beschriebenen bevorzugten Ausführungsbeispielen. In den die Ausführungsbeispiele lediglich schematisch darstellende Zeichnungen veranschaulichen im Einzelnen:
- Fig. 1:: eine schematische Ansicht eines Raumelementes nach einem ersten Ausführungsbeispiel;
- Fig. 2:: eine schematische Ansicht eines Raumelementes nach einem zweiten Ausführungsbeispiel und
- Fig. 3:: eine Draufsicht auf das Raumelement gemäß Fig. 2.

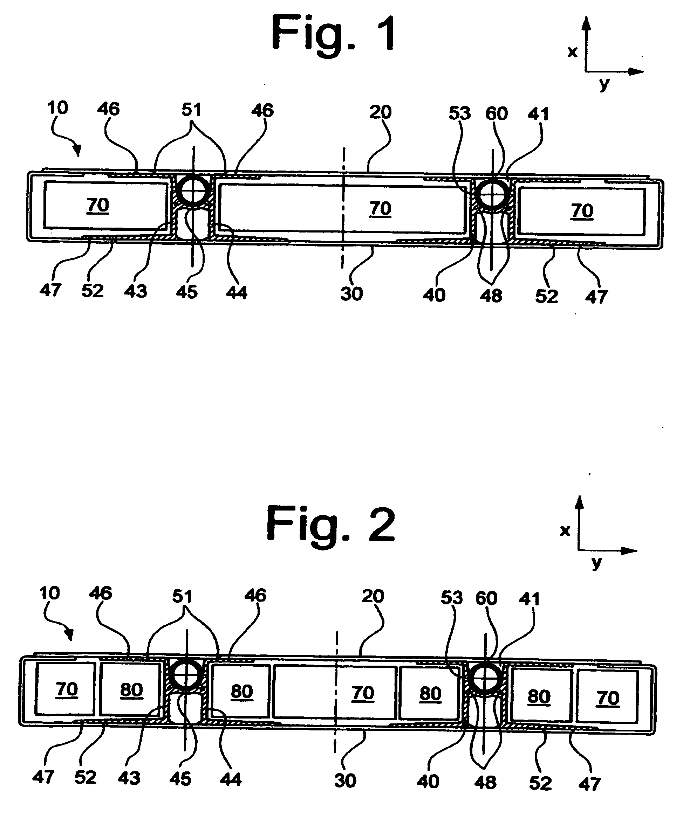

Die in den Fig. 1 und 2 wiedergegebenen Ausführungsbeispiele des erfindungsgemäßen Raumelementes 10 sind durch eine erste Decklage 20, eine zweite Decklage 30 und wenigstens ein Trägerelement 40, in dem eine Leitungsvorrichtung 60 aufgenommen ist, gekennzeichnet. In beiden Ausführungsbeispielen weist das Raumelement 10 zwei Trägerelemente 40 auf. Es sind jedoch andere Ausführungen eines Raumelementes 10 denkbar, in der ein, zwei oder mehr als zwei Trägerelemente 40 vorgesehen sein können.

Die Leitungsvorrichtung 60 steht in wärmeleitender Berührung mit dem Trägerelement 40 und das Trägerelement 40 steht in wärmeleitender Berührung mit der ersten Decklage 20 und der zweiten Decklage 30. Das Trägerelement 40 ist zwischen der ersten Decklage 20 und der zweiten Decklage 30 angeordnet und kann vorzugsweise kraftschlüssig mit der ersten Decklage 20 und der zweiten Decklage 30 verbunden sein. Die Leitungsvorrichtung 60 weist einen kreisförmigen Querschnitt auf, wie er insbesondere in den Fig. 1 und 2 zu erkennen ist. Die Leitungsvorrichtung 60 ist kraft- und formschlüssig in einer Aussparung 41 des Trägerelementes 40 aufgenommen.

Das Trägerelement 40 weist einen ersten Steg 43, einen zweiten Steg 44 und einen Verbindungsabschnitt 45, der den ersten Steg 43 mit dem zweiten Steg 44 verbindet, auf. Der erste Steg 43 und der zweite Steg 44 verlaufen dabei annähernd parallel zueinander und der Verbindungsabschnitt 45 verläuft annähernd orthogonal zum ersten Steg 43 und zum zweiten Steg 44. Die Aussparung 41 ist durch den ersten Steg 43, den zweiten Steg 44 und den Verbindungsabschnitt 45 gebildet. Der erste Steg 43 und der zweite Steg 44 verlaufen im Wesentlichen orthogonal zu den Decklagen 20, 30. Der Verbindungsabschnitt 45 verläuft annähernd parallel zu den Decklagen 20, 30. Die Aussparung 41 bildet einen Kontaktabschnitt 53, in dem die Leitungsvorrichtung 60 mit dem Trägerelement 40 in wärmeleitender Berührung steht.

An der Aussparung 41 ist eine Kerbe 48, die im Wesentlichen parallel zum Trägerelement 40 verläuft, angeordnet. Vorzugsweise ist die Kerbe 48 an dem Punkt angeordnet, in dem der Verbindungsabschnitt 45 mit einem Steg 43, 44 verbunden ist. Weiterhin vorzugsweise sind die Kerben 48 auf der der Einsparung 41 zugewandten Seiten des Verbindungsabschnitts 45 angeordnet. Diese Ausgestaltung erleichtert das Einpressen der Leitungsvorrichtung 60 in das Trägerelement 40, da die Kerben 48 eine Erhöhung der Nachgiebigkeit der Aussparung 41 bewirken. Dies bedeutet, dass die Stege 43, 44 im Bereich der Aussparung 41 leichter auseinanderdrückbar sind, womit eine geringere Kraft zum Einpressen der Leitungsvorrichtung 40 benötigt wird. Weiterhin ermöglicht die erhöhte Flexibilität der Aussparung 41, dass der Kontaktabschnitt 53 die Leitungsvorrichtung 60 leichter umgreift, womit ein Formschluss zwischen Trägerelement 40 und Leitungsvorrichtung 60 ermöglicht wird.

Vorzugsweise sind die Trägerelemente 40 mit wenigstens einem ersten Wärmeleitelement 46 und wenigstens einem zweiten Wärmeleitelement 47 versehen. In den in den Fig. 1 und 2 wiedergegebenen Ausführungsbeispielen des Raumelementes 10 weisen die Trägerelemente 40 jeweils zwei erste Wärmeleitelemente 46 und zwei zweite Wärmeleitelemente 47 auf. Die Wärmeleitelemente 46, 47 verlaufen im Wesentlichen parallel zu den Decklagen 20, 30 und zum Verbindungsabschnitt 45 des Trägerelementes 40. Weiterhin verlaufen die Wärmeleitelemente 46, 47 im Wesentlichen orthogonal zu den Stegen 43, 44. Die ersten Wärmeleitelemente 46 bilden eine erste Kontaktfläche 51, die mit der ersten Decklage 20 in wärmeleitender Berührung steht. Das zweite Wärmeleitelement 47 bildet eine zweite Kontaktfläche 52, die mit der zweiten Decklage 30 in wärmeleitender Berührung steht. Die Parallelität zwischen den Wärmeleitelementen 46, 47 und den Decklagen 20, 30 ermöglicht eine Vergrößerung der Kontaktflächen 51, 52, wodurch die Wärmeleitfähigkeit zwischen Trägerelement 40 und Decklagen 20, 30 erhöht wird. Die Wärmeleitelemente 46, 47 erlauben zudem, dass eine höhere Kraft von den Decklagen 20, 30 an die Stege 43, 44 geleitet wird, wodurch der Kraftschluss zwischen den Decklagen 20, 30 und dem Trägerelement 40 erhöht wird. In einer weiteren, nicht dargestellten Ausführungsform, können die Trägerelemente 40 jeweils ein, zwei, oder mehr als zwei erste und/oder zweite Wärmeleitelemente 46, 47 aufweisen.

In den in Fig. 1 wiedergegebenen Ausführungsbeispielen ist ein Schallabsorptionselement 70 in einer ersten Richtung X zwischen den Decklagen 20, 30 angeordnet. In einer quer zur ersten Richtung X verlaufenden zweiten Richtung Y ist das Schallabsorptionselement 70 zwischen zwei Trägerelementen 40 angeordnet. Das Schallabsorptionselement 70 dient insbesondere zur Verbesserung des akustischen Raumklimas des Raumes, in dem sich das Raumelement 10 befindet und, falls das Raumelement 10 beispielsweise an einer Geschosstrenndecke aufgehängt ist, auch zur Schalldämmung zwischen dem Raum, in dem das Raumelement 10 aufgehängt ist, und dem Raum, der von dem Raum, in dem das Raumelement 10 aufgehängt ist, durch die Geschosstrenndecke getrennt ist. In dem in Fig. 1 wiedergegebenen Ausführungsbeispiel ist das Schallabsorptionselement 70 in der ersten Richtung X zwischen den ersten Wärmeleitelementen 46 und den zweiten Wärmeleitelementen 47 der Trägerelemente 40 angeordnet. Durch die Integration eines Schallabsorptionselementes 70 in ein Raumelement 10 dient das Raumelement 10 auch zur Schallabsorption.

In dem in Fig. 2 wiedergegebenen Ausführungsbeispiel ist das Schallabsorptionselement 70 ebenfalls in der ersten Richtung X zwischen der ersten Decklage 20 und der zweiten Decklage 30 angeordnet. In der zweiten Richtung Y ist das Schallabsorptionselement 70 ebenfalls zwischen zwei Trägerelementen 40 angeordnet. Das in Fig. 2 wiedergegebene Ausführungsbeispiel ist im Besonderen dadurch gekennzeichnet, dass das Raumelement 10 Latentwärmespeicher 80 umfasst. In dem Ausführungsbeispiel sind benachbart zu den Trägerelementen 40 jeweils zwei Latentwärmespeicher 80 angeordnet. Somit ist in der zweiten Richtung Y das Schallabsorptionselement 70 zwischen zwei Latentwärmespeichem 80 angeordnet. Die Latentwärmespeicher 80 sind in der ersten Richtung X zwischen einem ersten Wärmeleitelement 46 und einem zweiten Wärmeleitelement 47 eines Trägerelements 40 angeordnet. Weiterhin sind die Latentwärmespeicher 80 benachbart zu einem Steg 43, 44 eines Trägerelementes 40 angeordnet.

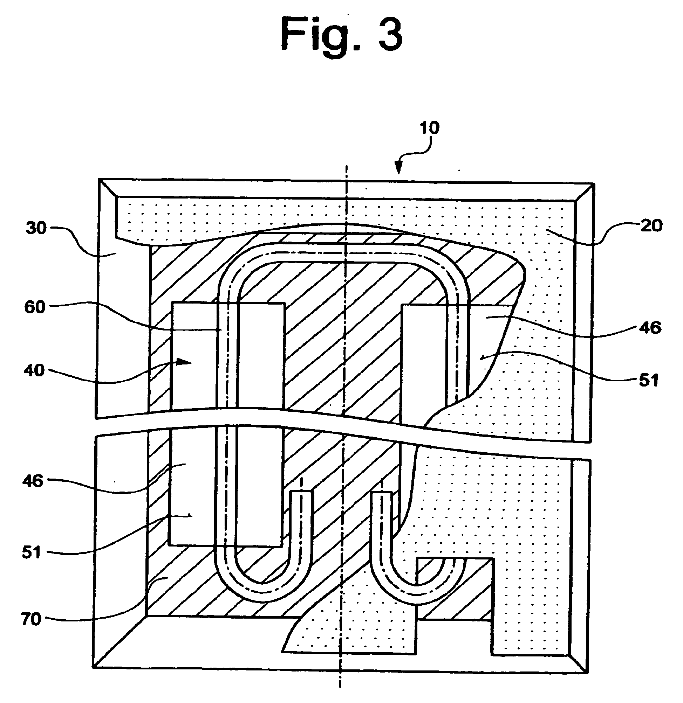

Die Draufsicht gemäß Fig. 3 gibt durch einen Ausbruch in der Decklage 20 das Schallabsorptionselement 70 zu erkennen. Der Latentwärmespeicher (PCM) 80 hingegen wird durch den Schenkel 46 des Trägerelements 40 verdeckt.

Die Latentwärmespeicher 80 dienen insbesondere zur Speicherung von Wärme oder Kälte, wodurch die Spitzenleistungen des Raumelementes 10 weiter verbessert werden. Durch die benachbarte Anordnung der Latentwärmespeicher 80 an den Trägerelementen 40 wird erreicht, dass eine effiziente Wärmeübertragung sowohl von der Leitungsvorrichtung 60 an den Latentwärmespeicher 80, als auch von dem Latentwärmespeicher 80 and die Decklagen 20, 30 mittels der Trägerelemente 40 gewährleistet ist.

Das erfindungsgemäße Raumelement 10 ermöglicht, je nach erforderlicher Heiz-/Kühlleistung, dass die Trägerelemente 40 in variablen Abständen und Längen montiert werden können. Das erfindungsgemäße Raumelement 10 ermöglicht eine durch das erste Deckelement 20 gebildete thermisch aktive Oberseite, die mit derselben Leitungsvorrichtung 60 wie die zweite Decklage 30 gekühlt oder geheizt wird. Dies wird insbesondere durch das Trägerelement 40 mit an Wärmeleitelementen 46, 47 gebildeten Kontaktflächen 51, 52 erreicht. Die somit thermisch aktivierten Decklagen 20, 30 des Raumelementes 10 sorgen für eine ungehinderte Wärmeabgabe bzw. -annahme.

Die an der durch die erste Decklage 20 gebildete Oberseite des Raumelementes 10 vorbeiströmende Raumluft kann unter Wärmeabgabe -aufnahme ungehindert in den Raum zurückströmen, in dem das Raumelement 10 angeordnet ist. Der konvektive Wärmeaustausch wird somit erhöht.

Weiterhin bildet die erste Decklage 20 eine Strahlungsaustauschfläche zu einer Geschosstrenndecke, an welcher das Raumelement 10 angebracht ist. Auf diese Weise kann der Strahlungsaustausch zur darüberliegenden Geschosstrenndecke hergestellt oder verbessert werden.

Somit bildet das erfindungsgemäße Raumelement 10 bei gleicher Baugröße höhere flächenbezogene Wärme- und Kühlleistungen im Vergleich zu bekannten Bauweisen. Dies impliziert auch eine höhere Wirtschaftlichkeit des Betriebes eines erfindungsgemäßen erfindungsgemäßen Raumelementes 10. Zudem wird insbesondere die thermische Kopplung zur Geschosstrenndecke mittels Strahlungsaustausch zwischen einer durch die erste Decklage 20 zusätzlich gebildete Strahlungsfläche verbessert.

### Bezugszeichenliste

- 10: Raumelement

- 20: erste Decklage

- 30: zweite Decklage

- 40: Trägerelement
- 41: Aussparung
- 43: erster Steg
- 44: zweiter Steg
- 45: Verbindungsabschnitt
- 46: erstes Wärmeleitelement
- 47: zweites Wärmeleitelement
- 48: Kerbe
- 51: erste Kontaktfläche
- 52: zweite Kontaktfläche
- 53: Kontaktabschnitt

- 60: Leitungsvorrichtung

- 70: Schallabsorptionselement

- 80: Latentwärmespeicher

- X: erste Richtung
- Y: zweite Richtung

## Patentansprüche

1. Raumelement, insbesondere zum Kühlen, Heizen und/oder zur Schallabsorption, umfassend:
- eine erste Decklage (20) ;
- eine zweite Decklage (30), die von der ersten Decklage (20) beabstandet ist;
- eine Leitungsvorrichtung (60);
- wenigstens ein Trägerelement (40), das die Leitungsvorrichtung (60) abstützt und zwischen den Decklagen (20, 30) angeordnet ist;
- wobei das Trägerelement (40) eine erste Kontaktfläche (51), die in wärmeleitender Berührung mit der ersten Decklage (20) steht, und eine zweite Kontaktfläche (52), die in wärmeleitender Berührung mit der zweiten Decklage (30) steht, aufweist,
- wobei das Trägerelement (40) einen Kontaktabschnitt (53) aufweist, der in wärmeleitender Berührung mit der Leitungsvorrichtung (60) steht,
- wobei das Trägerelement (40) einen ersten Steg (43), einen zweiten Steg (44) und einen Verbindungsabschnitt (45), der den ersten Steg (43) mit dem zweiten Steg (44) verbindet, aufweist, **dadurch gekennzeichnet, dass**
der erste Steg (43) und der zweite Steg (44) im Wesentlichen orthogonal und der Verbindungsabschnitt (45) annähernd parallel zu den Decklagen (20, 30) verläuft.

2. Raumelement nach Anspruch 1, **dadurch gekennzeichnet, dass** der Kontaktabschnitt (53) durch eine Aussparung (41) gebildet ist, in der die Leitungsvorrichtung (60), vorzugsweise mittels Kraftschluss, aufgenommen ist.

3. Raumelement nach Anspruch 2, **dadurch gekennzeichnet, dass** die Aussparung (41) eine an der Form der Leitungsvorrichtung (60) angepasste Form aufweist, wobei vorzugsweise die Leitungsvorrichtung (60) im Querschnitt kreisförmig ist.

4. Raumelement nach Anspruch 2 oder 3, **dadurch gekennzeichnet, dass** an der Aussparung (41) eine Kerbe (48), die im Wesentlichen parallel zum Trägerelement (40) verläuft, angeordnet ist.

5. Raumelement nach einem der Ansprüche 2 bis 4, **dadurch gekennzeichnet, dass** die Aussparung (41) durch den ersten Steg (43), den zweiten Steg (44) und den Verbindungsabschnitt (45) gebildet ist.

6. Raumelement nach einem der Ansprüche 1 bis 5, **dadurch gekennzeichnet, dass** das Trägerelement (40) wenigstens ein erstes Wärmeleitelement (46) aufweist, an dem die erste Kontaktfläche (51) angeordnet ist und das vorzugsweise im Wesentlichen parallel zur ersten Decklage (20) verläuft.

7. Raumelement nach Anspruch 6, **dadurch gekennzeichnet, dass** das erste Wärmeleitelement (46) mit dem ersten Steg (43) und/oder mit dem zweiten Steg (44) verbunden ist.

8. Raumelement nach einem der Ansprüche 1 bis 7, **dadurch gekennzeichnet, dass** das Trägerelement (40) wenigstens ein zweites Wärmeleitelement (47) aufweist, an dem die zweite Kontaktfläche (52) angeordnet ist und das vorzugsweise im Wesentlichen parallel zur ersten Decklage (20) verläuft.

9. Raumelement nach Anspruch 8, **dadurch gekennzeichnet, dass** das zweite Wärmeleitelement (47) mit dem ersten Steg (43) und/oder mit dem zweiten Steg (44) verbunden ist.

10. Raumelement nach einem der Ansprüche 1 bis 9, **gekennzeichnet durch** ein Schallabsorptionselement (70), das in einer ersten Richtung (X) zwischen den Decklagen (20, 30) und in einer quer zur ersten Richtung (X) verlaufenden zweiten Richtung (Y) zwischen den Trägerelementen (40) angeordnet ist.

11. Raumelement nach einem der Ansprüche 1 bis 10, **gekennzeichnet durch** einen Latentwärmespeicher (80), der in einer ersten Richtung (X) zwischen den Decklagen (20, 30) und in einer quer zur ersten Richtung (X) verlaufenden zweiten Richtung (Y) zwischen den Trägerelementen (40) angeordnet ist.

12. Raumelement nach einem der Ansprüche 1 bis 11, **dadurch gekennzeichnet, dass** die Leitungsvorrichtung (60) mäanderförmig verläuft.

13. Raumelement nach einem der Ansprüche 1 bis 12, **dadurch gekennzeichnet, dass** die Decklagen (20, 30) eine Perforation aufweisen.

## Claims

1. Spatial element, in particular for cooling, heating and/or for sound absorption, comprising:
- a first cover layer (20);
- a second cover layer (30) which is spaced apart from the first cover layer (20);
- a pipe device (60);
- at least one carrier element (40) which supports the pipe device (60) and is arranged between the cover layers (20, 30);
- wherein the carrier element (40) has a first contact surface (51) which is in heat-conducting contact with the first cover layer (20), and a second contact surface (52) which is in heat-conducting contact with the second cover layer (30),
- wherein the carrier element (40) has a contact portion (53) which is in heat-conducting contact with the pipe device (60),
- wherein the carrier element (40) has a first web (43), a second web (44) and a connecting portion (45) which connects the first web (43) to the second web (44), **characterized in that**
the first web (43) and the second web (44) extend substantially orthogonally to the cover layers (20, 30) and the connecting portion (45) extends approximately parallel to the cover layers (20, 30).

2. Spatial element according to Claim 1, **characterized in that** the contact portion (53) is formed by a recess (41) in which the pipe device (60) is accommodated, preferably by means of a force fit.

3. Spatial element according to Claim 2, **characterized in that** the recess (41) has a shape adapted to the shape of the pipe device (60), wherein the pipe device (60) is preferably circular in cross section.

4. Spatial element according to Claim 2 or 3, **characterized in that** a notch (48), which extends substantially parallel to the carrier element (40), is arranged on the recess (41).

5. Spatial element according to one of Claims 2 to 4, **characterized in that** the recess (41) is formed by the first web (43), the second web (44) and the connecting portion (45).

6. Spatial element according to one of Claims 1 to 5, **characterized in that** the carrier element (40) has at least one first heat-conducting element (46) on which the first contact surface (51) is arranged and which preferably extends substantially parallel to the first cover layer (20).

7. Spatial element according to Claim 6, **characterized in that** the first heat-conducting element (46) is connected to the first web (43) and/or to the second web (44).

8. Spatial element according to one of Claims 1 to 7, **characterized in that** the carrier element (40) has at least one second heat-conducting element (47) on which the second contact surface (52) is arranged and which preferably extends substantially parallel to the first cover layer (20).

9. Spatial element according to Claim 8, **characterized in that** the second heat-conducting element (47) is connected to the first web (43) and/or to the second web (44).

10. Spatial element according to one of Claims 1 to 9, **characterized by** a sound-absorbing element (70) which is arranged between the cover layers (20, 30) in a first direction (X) and between the carrier elements (40) in a second direction (Y) extending transversely to the first direction (X).

11. Spatial element according to one of Claims 1 to 10, **characterized by** a latent heat accumulator (80) which is arranged between the cover layers (20, 30) in a first direction (X) and between the carrier elements (40) in a second direction (Y) extending transversely to the first direction (X).

12. Spatial element according to one of Claims 1 to 11, **characterized in that** the pipe device (60) extends in a meandering fashion.

13. Spatial element according to one of Claims 1 to 12, **characterized in that** the cover layers (20, 30) have a perforation.

## Revendications

1. Elément spatial, en particulier pour refroidir, chauffer et/ou absorber les sons, comprenant :
- une première couche de recouvrement (20) ;
- une deuxième couche de recouvrement (30) qui est espacée de la première couche de recouvrement (20) ;
- un dispositif de conduite (60) ;
- au moins un élément de support (40) qui supporte le dispositif de conduite (60) et est disposé entre les couches de recouvrement (20, 30) ;
- l'élément de support (40) présentant une première surface de contact (51) qui est en contact thermoconducteur avec la première couche de recouvrement (20), et une deuxième surface de contact (52) qui est en contact thermoconducteur avec la deuxième couche de recouvrement (30),
- l'élément de support (40) présentant une portion de contact (53) qui est en contact thermoconducteur avec le dispositif de conduite (60),
- l'élément de support (40) présentant une première branche (43), une deuxième branche (44) et une portion de connexion (45) qui relie la première branche (43) à la deuxième branche (44), **caractérisé en ce que**
la première branche (43) et la deuxième branche (44) sont essentiellement perpendiculaires aux couches de recouvrement (20, 30) et la portion de connexion (45) s'étend approximativement parallèlement aux couches de recouvrement (20, 30).

2. Élément spatial selon la revendication 1, **caractérisé en ce que** la portion de contact (53) est formée par un évidement (41) dans lequel est reçu le dispositif de conduite (60), de préférence par engagement par correspondance de force.

3. Élément spatial selon la revendication 2, **caractérisé en ce que** l'évidement (41) présente une forme adaptée à la forme du dispositif de conduite (60), le dispositif de conduite (60) ayant de préférence une section transversale circulaire.

4. Élément spatial selon la revendication 2 ou 3, **caractérisé en ce qu'**une encoche (48) qui s'étend essentiellement parallèlement à l'élément de support (40) est disposée au niveau de l'évidement (41).

5. Élément spatial selon l'une quelconque des revendications 2 à 4, **caractérisé en ce que** l'évidement (41) est formé par la première branche (43), la deuxième branche (44) et la portion de connexion (45).

6. Élément spatial selon l'une quelconque des revendications 1 à 5, **caractérisé en ce que** l'élément de support (40) présente au moins un premier élément thermoconducteur (46) au niveau duquel est disposée la première surface de contact (51) et qui s'étend de préférence essentiellement parallèlement à la première couche de recouvrement (20).

7. Élément spatial selon la revendication 6, **caractérisé en ce que** le premier élément thermoconducteur (46) est connecté à la première branche (43) et/ou à la deuxième branche (44).

8. Élément spatial selon l'une quelconque des revendications 1 à 7, **caractérisé en ce que** l'élément de support (40) présente au moins un deuxième élément thermoconducteur (47), au niveau duquel est disposée la deuxième surface de contact (52) et qui s'étend de préférence essentiellement parallèlement à la première couche de recouvrement (20).

9. Élément spatial selon la revendication 8, **caractérisé en ce que** le deuxième élément thermoconducteur (47) est connecté à la première branche (43) et/ou à la deuxième branche (44).

10. Élément spatial selon l'une quelconque des revendications 1 à 9, **caractérisé par** un élément d'absorption des sons (70) qui est disposé dans une première direction (X) entre les couches de recouvrement (20, 30) et dans une deuxième direction (Y) s'étendant transversalement à la première direction (X) entre les éléments de support (40).

11. Élément spatial selon l'une quelconque des revendications 1 à 10, **caractérisé par** un accumulateur de chaleur latente (80) qui est disposé dans une première direction (X) entre les couches de recouvrement (20, 30) et dans une deuxième direction (Y) s'étendant transversalement à la première direction (X) entre les éléments de support (40).

12. Élément spatial selon l'une quelconque des revendications 1 à 11, **caractérisé en ce que** le dispositif de conduite (60) s'étend en méandres.

13. Élément spatial selon l'une quelconque des revendications 1 à 12, **caractérisé en ce que** les couches de recouvrement (20, 30) présentent une perforation.
